(19) Europäisches Patentamt
European Patent Office
Office européen des brevets

(11) **EP 2 437 043 B1**

(12) **EUROPEAN PATENT SPECIFICATION**

(45) Date of publication and mention
of the grant of the patent:
**16.07.2014 Bulletin 2014/29**

(51) Int Cl.:
***G01M 15/04*** *(2006.01)*       ***G01M 17/007*** *(2006.01)*

(21) Application number: **10425321.6**

(22) Date of filing: **04.10.2010**

(54) **Method and device for the diagnosis and the evaluation of vehicular performances**

Verfahren und Vorrichtung zur Diagnose und Bewertung von Fahrzeugleistungen

Procédé et dispositif pour le diagnostic et l'évaluation des performances d'un véhicule

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.04.2012 Bulletin 2012/14**

(73) Proprietor: **Iveco S.p.A.**
**10156 Torino (IT)**

(72) Inventor: **Varalda, Orlando**
**10088 Volpiano (IT)**

(74) Representative: **Borsano, Corrado et al**
**Notarbartolo & Gervasi S.p.A.**
**Corso di Porta Vittoria, 9**
**20122 Milano (IT)**

(56) References cited:
**US-A- 6 032 644        US-A1- 2008 125 929**
**US-A1- 2009 025 467**

**Description**

Application field of the invention

The present invention relates to the field of test methods for vehicles' behavior, and in particular to a method and device for the diagnosis and the evaluation of vehicular performances.

Description of the prior art

The need for an evaluation of vehicular performance is known in the art, for example as a result of driver's complaints about presumed irregularities in vehicle's behavior that can be due to a low performance or to an increase of fuel consumption. In general the vehicle is brought to the garage for routine tests, but sometimes this is not enough.
For more exhaustive tests, it is necessary to verify the real performance of the vehicle.
In the past, the engine would have been disassembled and put on the test-bed, while at present this operation is no longer possible, because of the high number of vehicular components. Thus, at present, the use of a roller test bench is known in the art, where the vehicle is subjected to load tests. The roller dynamometer tests are, however, difficult and expensive, also because few garages are equipped with a roller test bench, therefore it is not easy to bring the vehicle to one of these garages, which may also have a long waiting time.
US-2008/125929 shows a diagnostic method for an internal combustion engine, whereby an intended (= calculated) engine torque is compared with a determined (= actual) engine torque.

Summary of the invention

Therefore the aim of the present invention is to overcome all the drawbacks mentioned above and to provide a method and device for the diagnosis and the evaluation of vehicular performance, which simulates a roller test bench and which provides better and easy-to-use features, that can be performed by any garage, with a road test. The method has to be simple and to respect the traffic rules, in real and normal travelling conditions. It has to be objective, thus not subject to subjective evaluations, for example by a test driver.
The object of the present invention is a method for the diagnosis and the evaluation of the performance of a vehicle equipped with at least an engine control unit, as in claim 1, comprising the steps of:

- determination, in at least a period of acceleration followed by a period of deceleration of the vehicle, of: a curve of the maximum torque deliverable by the engine control unit; a curve of the actual torque being delivered by the engine control unit; a first torque curve calculated by considering the resistance contributions deriving from the engine and from other vehicular and/or external elements; a second torque curve, deriving from said first calculated torque curve, calculated by subtracting an evaluation of said resistance contributions deriving from the engine and from other vehicular and/or external elements;
- comparison of said second torque curve, calculated during the acceleration time period, with said actual torque curve, in order to obtain said diagnosis and evaluation of vehicle's performance.

A further object of the present invention is a method for the diagnosis and the evaluation of the performance of a vehicle equipped with at least an engine control unit, as in claim 2, wherein said evaluation of the resistance contributions of vehicle's engine and of other vehicular and/or external elements is obtained by means of: calculation of average values, extended to said deceleration time period, of an instant resistance curve of vehicle's engine rotation, available from said engine control unit, and of said first curve; calculation of a negative average value by subtracting the average value of said instant resistance curve from the average value of said first curve; and wherein said second calculated torque curve is obtained by subtracting said negative average value, and the values of said instant resistance curve of the acceleration step, from said first curve, relating to said acceleration time, said values of said curve being referred to equivalent engine RPM numbers of said first curve.
A further object of the present invention is a method for the diagnosis and the evaluation of the performance of a vehicle equipped with at least an engine control unit, as in claim 3, wherein said comparison is done so that: if said second curve is lower than said actual torque curve, it identifies the existence of a potential engine problem; otherwise, if said second curve does not reach said actual torque curve in at least some points, it identifies the existence of a potential problem of other elements of the engine unit; otherwise, if said second curve exceeds said maximum torque curve, it identifies the existence of a potential tampering of the engine control unit; otherwise it identifies that the vehicular performance is correct.
A further object of the present invention is a method for the diagnosis and the evaluation of the performance of a vehicle equipped with at least an engine control unit, as in claim 4, wherein said vehicle's deceleration time period comprises a first step with released clutch, followed by a second step with pressed clutch.

A further object of the present invention is a method for the diagnosis and the evaluation of performance of a vehicle equipped with at least an engine control unit, as in claim 9, wherein said acceleration time period followed by vehicle's deceleration is determined according to the following conditions: exceeding a minimum speed threshold; verification of the torque request and that the friction is not pressed; verification that there are no causes for interruption, such as brake pedal pressed, engine brake or the hydraulic decelerator pressed; if there are no causes of interruption, it determines when the vehicle reaches the maximum speed, after which, during the deceleration step, it waits for a certain time (deceleration time-out), the end of which corresponds to said time period, being it determined from the moment wherein said clutch is no longer pressed.

A further object of the present invention is a method for the diagnosis and the evaluation of the performance of a vehicle equipped with at least an engine control unit, as in claim 10, wherein said acceleration time period followed by vehicle's deceleration comprises two or more of said periods, and wherein said diagnosis and evaluation of the vehicle's performance is obtained by the average of the contributions of each one of said periods.

A particular object of the present invention is a method and device for the diagnosis and the evaluation of the vehicular performance, as described more fully in the claims, which are an integral part of this description.

Brief description of the Figures

Further purposes and advantages of the present invention will become clear from the following detailed description of a preferred embodiment (and its alternative embodiments) and the drawings that are attached hereto, which are merely illustrative and non-limitative, in which:

figure 1 shows a flowchart of the operations of the preliminary verification of the validity of the vehicular performance measures to be performed;
figures 2 and 3 show flowcharts of the processing operations of the detected diagnostic data for the evaluation of the vehicular performance and the identification of problems of the different vehicular components;
figure 4 shows examples of the trend in time of the different torque values both detected and calculated, together with the trend of the engine RPM and of vehicle speed.

Detailed description of preferred embodiments of the invention

Generality.

The present invention proposes a method for the diagnosis and the evaluation of a vehicular performance based on road tests, the vehicle being both loaded and unloaded, in real travelling conditions having one or more acceleration steps, followed by deceleration steps, with standing start.

When an acceleration is required, the electronic control system of the engine will try to deliver the maximum possible torque, according to mechanical and environmental parameters, determining the injection of a definite quantity of fuel into the combustion chamber.

The acceleration that is obtained, on the contrary, results from the real torque that the engine is able to deliver to the wheels, by means of the kinematic chain ratios and as a function of the vehicle mass and of the difference resistance forces opposing the acceleration: for example drag, rolling resistance force, resistance force due to external factors such as wind, road slopes and their respective variations, or due to internal factors, such as frictions or starting of vehicular components such as the cooling fan. These factors may alter the measure, which, on the contrary, has to be certain.

In order to consider also the resistance forces due to the test environment, the acceleration is followed by a deceleration, so that all the conditions that can alter the test are considered also in the opposite way, nullifying the error.

The test is short and lasts for example 20 or 30 seconds, in order to reduce the error and to reduce the probability of intervention of additional internal or external factors, such as the ones mentioned above. Thus the assumption is that, in such a lapse of time, internal and external conditions are stable throughout the test, since it lasts for such a short time.

In practice, the test is performed with a standing start, with a rapid acceleration and a following upshifting, the accelerator pedal preferably being fully pressed in order to obtain the maximum available torque, followed by a deceleration. The values measured in a sub-interval of this overall interval, preferably the one corresponding to the period after upshifting and before deceleration, are the ones that will be considered for the test.

The deceleration is preferably split into two steps: a first step with both accelerator and clutch pedal released, followed by a step with clutch pedal pressed, in order to measure the resistance forces of the vehicle, with respect to the resistance forces generated also by the engine.

The test allows to obtain a number of parameter measurements, which are compared with the parameters available from the electronic control system of the engine, in order to detect the entity of the deviation of these values.

Indeed, the electronic control system of the engine has at its disposal some actual measurements, but this measurement allows to detect also the measurements that are not at its disposal.

It is possible to detect if the engine is actually reaching its rated output, and if the possible deviation is due to internal or to external factors.

Then the actual result is compared to the data from the electronic control system of the engine (in the following called "engine control unit"), in order to detect problems in the combustion chamber (injectors, diesel oil filters, valves, piston rings, or cylinder barrel wear) or in the supercharging system (turbine, air filter, intercooler, pipes), or in the exhaust gas system, or anywhere else.

Data and parameters needed for the test.

In the following the term "system" will identify the device suitable for the embodiment of the method, which may be for example an electronic system comprising a hardware and a software part, and connectors for accessing to internal data sources (for example by means of the CAN bus) or for accessing to external data inserted by an operator, or for automatically connecting to external data sources. The system may be integrated into the engine control unit, or it may be external and able to dialogue with the latter.

All data and parameters of the measurement are available, for example, on the vehicle bus (e.g. CAN) or can be directly derived from the engine control unit.

At the beginning it is necessary to insert some parameters, such as:

- Overall weight during the test (vehicle + passengers);
- Gearbox ratios at the different gears, rear-axle ratios, ratios of the distributors, if any, or of other elements of the kinematic chain, so that they can be referred to the engine RPM: these parameters may already be available, or they may be easily calculated on the basis of other available data and parameters;
- Driving wheel length, with a linear measure of the length on the road, in order to adjust the tachograph calibration which is set on a theoretical value, while, on the contrary, the wheel wears out and its length varies (an equivalent measurement, such as the measurement of the tyre wear, is also possible);
- Vehicle's front area and "CX", in order to consider the friction coefficient depending on the shape of the vehicle;
- Engine and transmission moments of inertia;
- Efficiency of the kinematic chain;
- rating of the tachograph.

It is also possible to add data for the identification of the test and for future evaluations, such as:

- personal data of the client, age of the vehicle (km), etc.;
- data automatically transferred from the electronic control unit, or marked on the vehicle, such as chassis number, version of the control unit of the electronic control system of the engine;

the group of parameters for validating the test, such as: oil and coolant temperature (about 50°C according to IVECO indications): these are the optimal recommended values for the test, but they are not mandatory.

Acquisition of measurement dynamic data.

The acquisition of data or of measurable magnitudes is performed by reading, from time to time, a number of measurable parameters by means of the vehicle electronic system; data are then stored in memory.

For example, in the following, a set of useful parameters for the test, originating from the vehicle (engine control unit), are mentioned:

- time spent for covering the distance;
- RPM of the engine;
- maximum deliverable torque: mechanical limit recognized as maximum limit, as a function of the specific vehicle configuration;
- actual torque delivered by the engine control unit, as a function of driver's request;
- instant resistance (friction) of engine's rotation;
- vehicle speed.

Other parameters may also be acquired by later evaluations of the diagnosis processing, such as for example: pedal conditions, clutch, brake, accelerator, decelerator, functioning ASR.

Verification of the measurement validity conditions.

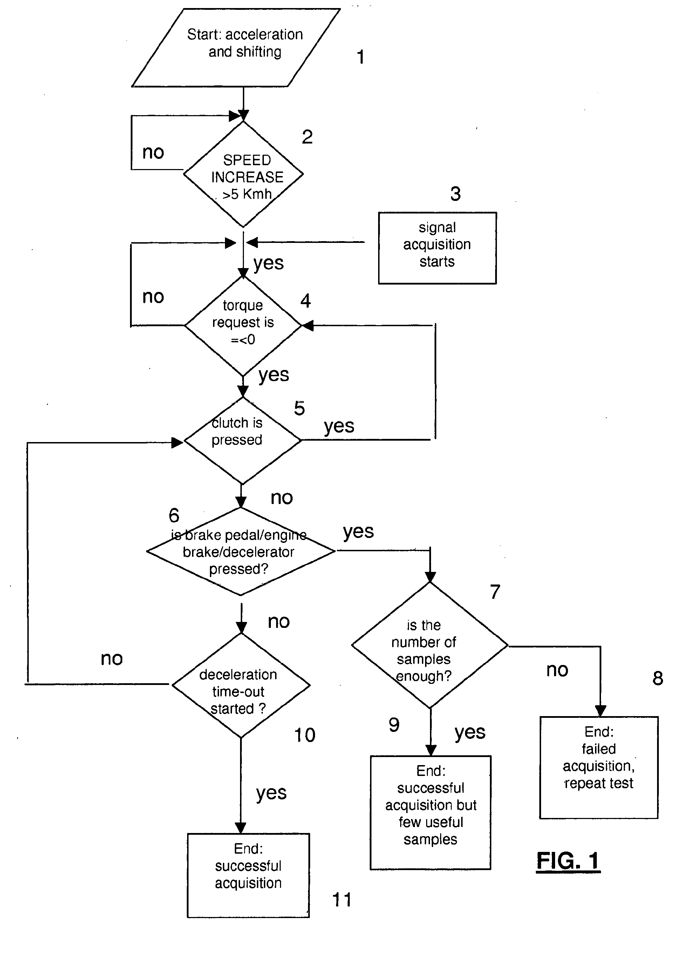

With reference to the flowchart in figure 1, the start condition (block 1) is determined, for example, by pressing a start test button.

When the vehicle starts, the system waits for the vehicle to exceed a minimum speed threshold e.g. 5 km/h (block 2), then it starts the data acquisition (block 3).

The system verifies that a torque request is present (block 4), that the clutch is not pressed (block 5), then if the vehicle is accelerating or decelerating.

Then it verifies that no causes for stopping the test (block 6) are present, such as for example the brake pedal pressed, the engine brake, the hydraulic decelerator pressed, or other causes described above. If it is so, it verifies (block 7) if enough samples have already been acquired: if it is not so, the test is considered as failed and should be repeated (block 8); if it is so, the test may be considered as successfully finished (block 9), but the reliability may be low due to the small number of samples, thus multiple tests may be necessary.

If there are no causes for stopping the engine, the first acceleration step starts, followed by a deceleration: the electronic control unit determines when the maximum speed is reached, namely the speed immediately followed by the deceleration, then it waits for a certain time, determined by a deceleration time-out (block 10), and after that it ends the acquisition (block 11).

The duration of the test depends on the duration of the deceleration step: from the start, the deceleration step may be variable, because it may depend on the time in which the last gear is used with clutch released, but when the deceleration starts, the system controls when the deceleration time-out starts, and it calculates a definite duration time of the test, which is the sum of the acceleration and the deceleration step.

Then the system informs that the data acquisition is correct and successful.

Moreover it is possible to carry out a sequence of multiple tests, each one of them determined by an acceleration step followed by a deceleration step, and then to average the obtained data, for example it is possible to cover a distance on a road first in a direction then in the opposite direction, in order to nullify the error that may derive from the road slope.

Processing of the acquired data.

The processing of such data will be referred to the periods wherein the data acquisition defined above is valid, and is based, according to the present invention, on the evaluation of the torque curves in the measurement period.

In the following a simplified formula for calculating the engine torque is shown as an example:

```
engine torque = (mass * acceleration + rolling_resistance +

drag) * wheel_radius /

(gearbox_ratio  *  gearbox_efficiency  *  rear_axle_ratio  *

rear_axle_efficiency)
```

The measured values refer to samples detected in time instants determined by the sampling frequency.

For each calculated acceleration point a delivered torque value is available for each measurement point.

The same algorithm is used for the deceleration, in order to detect all the frictions that are not considered in the calculation algorithm, as said above (e.g. oil viscosity, frictions due to an engine that should still break in, frictions of the kinematic chain, road slopes, wind, etc.). In addition there is the deceleration resistive torque due to the drag, which varies according to the speed; the counteracting torque due to wheel rolling, being proportioned to the weight, that should be delivered in addition by the engine; other counteracting torque factors.

By determining these values, both in acceleration and in deceleration, their contribution is, as a matter of fact, nullified, because opposite forces are summed in the two steps. More in particular, the torque delivered in acceleration, at the different RPM, is corrected by the torque delivered in deceleration, processed so that it can be referred to the same RPM value, as described more fully in the following.

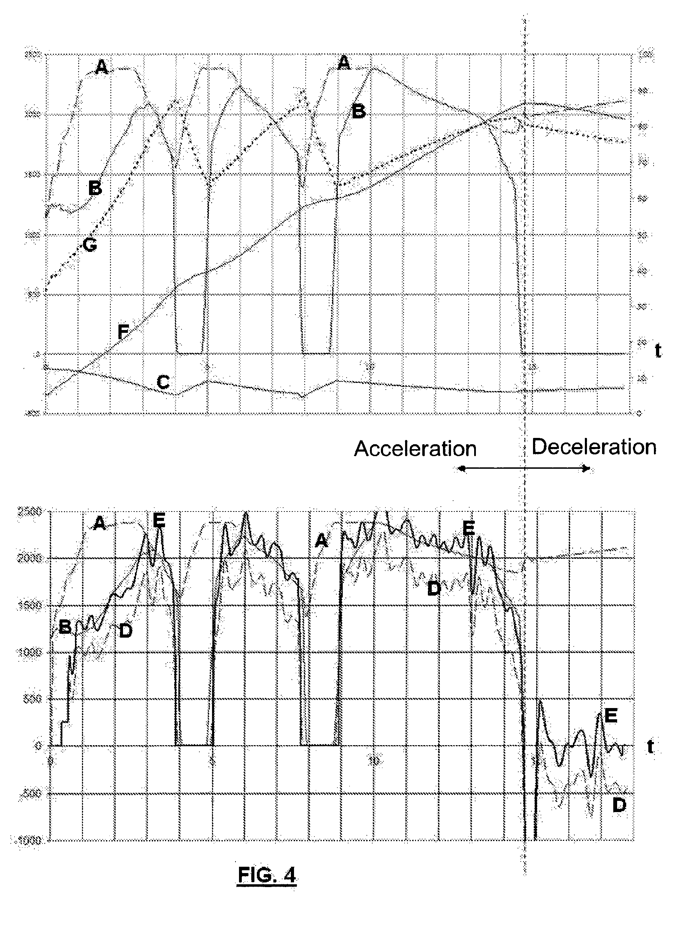

With reference to the charts of figure 4, they show examples of the trend in time (x-axis) of the different torque values both detected and calculated, together with the trend of the engine RPM and of the vehicle speed. The example refers to an acceleration step (on the left of the vertical line comprising both charts) followed by a deceleration step (on the right of the vertical line).

For the sake of clarity, the trends are shown on both charts with the same values on the x-axis and on the y-axis; some curves appear on both charts. The scales on the y-axis refer to (upper chart) torque values and RPM (left scale) and to speed value (right scale) and to torque only (lower chart).

More in particular, using the definitions given above:

curve A refers to the trend of the maximum deliverable torque (Nm);
curve B refers to the trend of the actual torque being delivered by the engine control unit;
curve C refers to the trend of the instant friction of engine's rotation, which is always negative, being it counteracting; such curve is available from the engine control unit, referred to the typical values of the engine type being tested;
curve D shows the trend of the overall calculated torque, for example by means of the formula defined above, considering all the friction contributions, both of the engine and of other vehicular and/or external elements;
curve E shows the trend of the calculated torque, obtained by subtracting an evaluation of the negative friction contribution from curve D, as described more fully in the following;
curve F shows the trend of the vehicle speed, that is increasing during the acceleration and decreasing during the deceleration;
curve G shows the trend of the engine RPM, which has a positive slopes in acceleration with gear engaged, and a negative slope when shifting the gear, while it is represented by a single segment with negative slope in deceleration.

In the charts, the segments of curve B with zero value correspond to the gear shifting intervals in acceleration, and to the constant condition in deceleration, where the deliverable and delivered torque is equal to zero.

Curves D and E, calculated point by point according to the method of the present invention, have an oscillating trend, due to the detected instantaneous variation.

The trend of curve D is normally lower than the trend of curve B, since, in normal conditions, friction factors, both engine friction and vehicular friction, actually lower the measured actual torque, but the engine control unit cannot consider these factors for determining the delivered torque of curve B, because they are out of its control.

Thus, curve D provides the trend of the calculated torque, considering all resistance contributions (friction), generated both by the engine and by other vehicular elements: The overall friction contribution is actually detectable from the trend of curve D in the deceleration step, when, with the clutch inserted, the negative contribution of the negative torque due to the engine, to the vehicle or to other external factors remains, as shown in the charts.

On the other hand, calculated curve E is obtained in the following way.

First, the average values of the curves C and D extended to the deceleration time are calculated.

Then, the average value of curve C is subtracted from the average value of curve D, thus obtaining an average negative value D' of the friction component due to the vehicle and to external factors.

The negative trend of the acceleration step of curve C, with values referred to equivalent engine RPM, and the negative average value D', previously calculated and referring to the friction contribution of the vehicle and of external factors, are subtracted from the trend of the acceleration step of curve D, thus obtaining the trend of the calculated torque E, which actually has higher values than the curve D, since the negative values have been subtracted.

Thus the overall torque value is made comparable with what is directly detected by the engine control unit, and therefore with what actually happens in the engine.

From the analysis of the calculated torque curves it is possible to diagnose a possible malfunctioning and also to determine its origin.

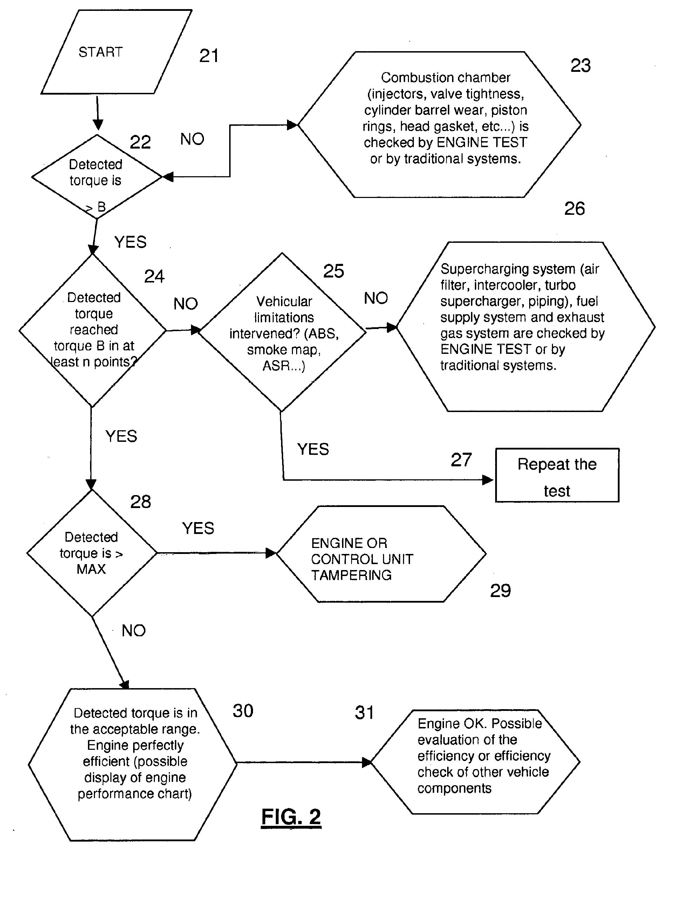

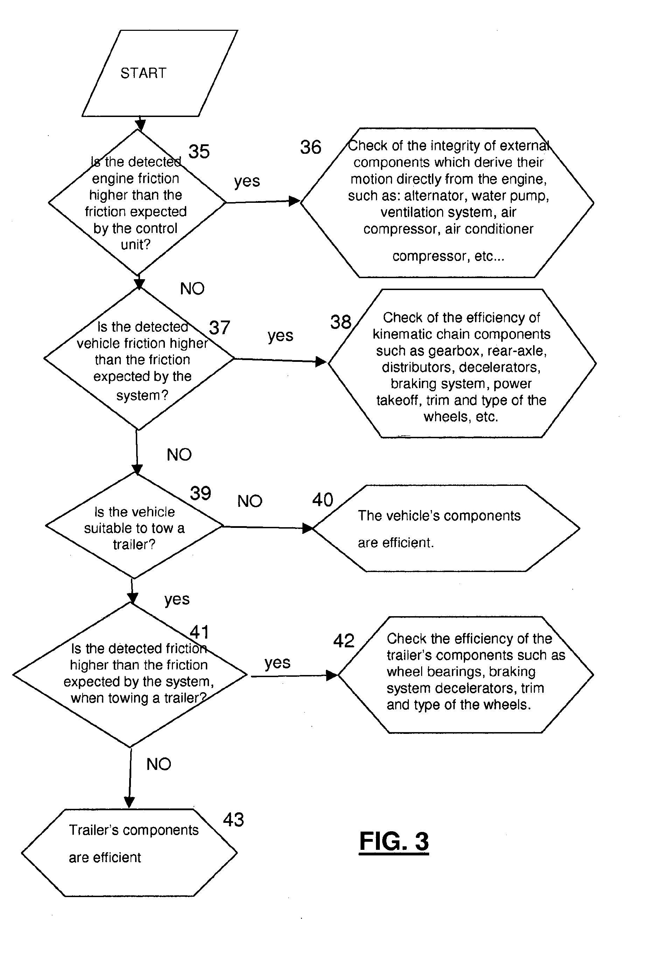

With reference to figures 2 and 3, when the test is considered as finished and successful, and the detected data are stored, it is possible to start the data analysis and processing (block 21).

The system first verifies (block 22) if the detected torque (curve E) is higher than the actual torque (curve B) during the acceleration step, possibly increased by a tolerance threshold.

If the case is negative, and the detected torque never reaches the actual torque, then a problem in the engine is possible. Therefore the combustion chamber can be checked (block 23) in a way known in the art, verifying: injectors, valve tightness, cylinder barrel wear, piston rings, head gasket, etc..

On the contrary, if the case is positive, the method verifies (block 24) if the detected torque (curve E) reached in at least n points the actual torque (curve B) during the acceleration step, that is if it has an oscillating trend (upper and lower) around the actual torque curve.

If the case is negative, the method verifies (block 25) if some vehicular limitation intervened, due for example to the intervention of ABS, smoke map, ASR, etc..

If the case is negative, other elements of the engine unit can be checked (block 26) by traditional means, for example: supercharging system (air filter, intercooler, turbosupercharger, pipes), fuel supply system, exhaust gas system. On the contrary, if the case is positive, the test should be repeated (block 27), since the intervention of vehicular limitation prevented from reaching and thus verifying vehicle's maximum performance.

If the detected torque (curve E) reached the actual torque (curve B) in at least n points, the method verifies if (block 28) the detected torque is higher than the maximum torque during the acceleration step. If it is so (block 29) a tampering of the engine control unit can be envisaged. Otherwise it is possible to consider (block 30) the detected torque (curve E) as acceptable, the engine as perfectly efficient, and vehicle's performance as correct. It is also possible to graphically show the vehicle's performance. After that it is possible to proceed (block 31) with the evaluation of the gain or with the verification of the efficiency of other components of the vehicle.

With reference to figure 3, the system verifies (block 35) if the detected engine friction curve is higher than the friction envisaged and stored in the engine control unit (curve C) referring to the deceleration step.

The detected engine friction is given by the difference between the overall calculated friction (curve D), while decelerating with the clutch engaged, and the friction calculated with clutch pressed.

If it is so, then the method verifies (block 36) the integrity of external vehicle components which derive their motion directly from the engine, such as: alternator, water pump, ventilation system, air compressor, air conditioning compressor, ecc..

Otherwise it verifies (block 37) if the detected friction curve of the vehicle is higher than a value stored in the system. The detected friction curve of the vehicle corresponds to the one calculated during the deceleration step with the clutch pressed.

In case it is positive, then the method verifies (block 38) the efficiency of the components of the kinematic chain, such as gearbox, rear-axle, distributors, decelerators, braking system, power takeoff, trim and type of the wheels, etc..

In the case it is negative, it is still possible to verify (block 39) if the vehicle is suitable to tow a trailer. If not, it is possible to finally affirm that (block 40) the vehicle is efficient in all its components.

If the vehicle is suitable to tow a trailer, it is possible to verify, by repeating the test, (block 41) if, when towing the trailer, the overall detected friction of the vehicle is higher than a value stored in the system. The overall friction of the vehicle corresponds to the one calculated during the deceleration step with the clutch pressed.

If it is so, the method verifies (block 42) the efficiency of the components of the trailer, such as wheel bearings, braking system decelerators, trim and type of the wheels, etc..

If it is not so, the trailer is efficient in all its components (block 43).

The method that is object of the invention in all the alternative embodiments described above, also allows to determine the efficiency of the vehicle in terms of variation of the fuel consumption (litres/km) with respect to expected values according to the evaluation of the engine control unit at the different engine RPM. This can be obtained by starting from the differences evaluated between the trends of said torque curves B, D, E (for example in Nm), the trend of the fuel consumption curve being connected in a way known in the art to the trend of the torque curve. The differences may be positive or negative, that can determine the worsening or the improving with respect to the expected consumption conditions. It is also possible to determine which is the vehicular element determining the worsening or the improvement, for example the engine, or other vehicular or external element.

The method of present invention may advantageously be realized by means of a computer program, which comprises program code means performing one or more steps of said method, when said program is run on a computer. For this reason the scope of the present patent is meant to cover also said computer program and the computer-readable means that comprises a recorded message, such computer-readable means comprising the program code means for performing one or more steps of such method, when such program is run on a computer.

## Claims

1. Method for the diagnosis and the evaluation of the performance of a vehicle equipped with at least an engine control unit, comprising the steps of:

   - determination, in at least a period of acceleration followed by a period of deceleration of the vehicle, of:

     - a curve (A) of maximum deliverable torque by the engine control unit;
     - a curve (B) of actual torque being delivered by the engine control unit;
     - a first torque curve (D) calculated according to the friction contributions of the vehicle engine and of other vehicular and/or external elements;
     - a second torque curve (E) calculated from said first calculated torque curve (D), by subtracting an evaluation of said friction contributions of the vehicle engine and of other vehicular and/or external elements;

     - comparison of said second torque curve (E), calculated during the acceleration time, with said actual torque curve (B), in order to obtain said diagnosis and evaluation of vehicle's performance.

2. Method for the diagnosis and the evaluation of the performance of a vehicle as in claim 1, wherein said evaluation of the resistance contributions of vehicle's engine and of other vehicular and/or external elements is obtained by means of:

- calculation of average values, extended to said deceleration time period, of a instant resistance curve (C) of vehicle's engine rotation, available from said engine control unit, and of said first curve (D);
- calculation of a negative average value (D') by subtracting the value of said instant resistance curve (C) from said average value of said first curve (D);

and wherein said second calculated torque curve (E) is obtained by subtracting said negative average value (D') and the values of said instant resistance curve (C) of the acceleration step from said first curve (D), said values of said curve (C) being referred to equivalent engine RPM of said first curve (D).

3. Method for the diagnosis and the evaluation of the performance of a vehicle as in claim 1, wherein said comparison is done so that:

- if said second curve (E) is lower than said actual torque curve (B), it identifies a potential problem of the engine;
- otherwise if said second curve (E) does not reach in at least some points said actual torque curve (B), it identifies the existence of a potential problem of other elements of the engine unit;
- otherwise if said second curve (E) exceeds said maximum torque curve (A), it identifies the existence of a potential tampering of the engine control unit;
- otherwise it identifies that the vehicular performance is correct.

4. Method for the diagnosis and the evaluation of the performance of a vehicle as in claim 2, wherein said vehicle's deceleration time period comprises a first step with released clutch, followed by a second step with pressed clutch.

5. Method for the diagnosis and the evaluation of the performance of a vehicle as in claim 4, wherein said comparison is done so that it identifies the existence of a potential problem in vehicle components outside the engine which derive their motion directly from the engine, if a detected engine friction curve is higher than said instant resistance curve (C) of the vehicle engine rotation, relating to the deceleration step, said detected engine friction resulting from the difference between the values of said first curve (D), during the deceleration, calculated with the clutch engaged, and the values calculated with the clutch pressed.

6. Method for the diagnosis and the evaluation of the performance of a vehicle as in claim 5, wherein said comparison is done so that it identifies the existence of a potential problem in components of the vehicle kinematic chain, if a first detected vehicle friction curve is higher than a first expected value according to the system, relating to the deceleration step, said detected vehicle friction resulting from the values of said first curve (D), during the deceleration, calculated with the clutch pressed.

7. Method for the diagnosis and the evaluation of the performance of a vehicle as in claim 6, wherein if the vehicle is suitable to tow a trailer, and if the trailer is present, said comparison is done so that it identifies the existence of a potential problem in components of the trailer, if a second detected vehicle friction curve is higher than a second expected value according to the system, said second detected vehicle friction curve resulting from the difference between the values of said first curve (D), during the deceleration, calculated with the clutch engaged, and the values calculated with the clutch pressed, otherwise the components of the trailer are considered as efficient.

8. Method for the diagnosis and the evaluation of the performance of a vehicle as in claim 1, comprising an initial acquisition step of parameters comprising one or more of the following values:

- overall weight of the vehicle;
- ratios of the kinematic chain;
- wheel length, with a linear measure of the length on the road;
- vehicle's front area and "CX";
- engine and transmission moments of inertia;
- efficiency of the kinematic chain;
- rating of the tachograph.

9. Method for the diagnosis and the evaluation of the performance of a vehicle as in claim 1, wherein said at least an acceleration time period followed by a vehicle's deceleration is determined according to the following conditions:

- exceeding of a minimum speed threshold;
- verification of the torque request and that the friction is not pressed;
- verification that there are no causes of interruption, such as pressed brake pedal, engine brake, or hydraulic decelerator,

if there are no causes of interruption, it determines when the vehicle reaches the maximum speed, after which, during the deceleration step, it waits for a certain time (deceleration time-out), the end of which corresponds to said period of time, being it determined from the moment wherein said clutch is no longer pressed.

10. Method for the diagnosis and the evaluation of the performance of a vehicle as in claim 9, wherein said at least an acceleration time period followed by a vehicle's deceleration comprises two or more of said periods, and wherein said diagnosis and evaluation of the vehicle's performance is obtained by averaging the contribution of each one of said periods.

11. Method for the diagnosis and the evaluation of the performance of a vehicle as in any of the previous claims, wherein said first torque curve (D) is calculated according to the following formula:

```
engine torque = (mass * acceleration + rolling_resistance +

drag) * wheel_radius /

(gearbox_ratio  *  gearbox_efficiency  *  rear_axle_ratio  *

rear_axle_efficiency).
```

12. Method for the diagnosis and the evaluation of the performance of a vehicle as in any of the previous claims, comprising a step for the evaluation of the fuel consumption variation with respect to fuel consumption values expected in theory, on the basis of the differences of the trends of said actual torque curves (B), and of first (D) and second (E) torque curve calculated at the different engine RPM.

13. Device for the diagnosis and the evaluation of the performance of a vehicle comprising means of actuating each one of the steps of the method according to any of the previous claims.

14. Computer program comprising program code means suitable for performing the steps of any claim from 1 to 12, when such program is run on a computer.

15. Computer-readable means comprising a recorded program, said computer-readable means comprising program code means suitable for performing the steps according to the claims from 1 to 12, when said program is run on a computer.

**Patentansprüche**

1. Verfahren für die Diagnose und die Bewertung der Leistungsfähigkeit eines Fahrzeugs, das mit zumindest einer Motorsteuereinheit ausgestattet ist, mit den Schritten, dass:

- in zumindest einer Beschleunigungsperiode gefolgt durch eine Verlangsamungsperiode des Fahrzeugs ermittelt wird:

- eine Kurve (A) eines maximal lieferbaren Drehmoments von der Motorsteuereinheit;
- eine Kurve (B) des tatsächlichen Drehmoments, das von der Motorsteuereinheit geliefert wird;
- eine erste Drehmomentkurve (D), die gemäß den Reibungsbeiträgen des Fahrzeugmotors und anderer Fahrzeug- und/oder externer Elemente berechnet wird;
- eine zweite Drehmomentkurve (E), die aus der ersten berechneten Drehmomentkurve (D) durch Subtraktion einer Bewertung der Reibungsbeiträge des Fahrzeugmotors und anderer Fahrzeug- und/oder externer Elemente berechnet wird;

- die zweite Drehmomentkurve (E), die während der Beschleunigungszeit berechnet wird, mit der tatsächlichen Drehmomentkurve (B) verglichen wird, um die Diagnose und Bewertung der Leistungsfähigkeit des Fahrzeugs zu erhalten.

2. Verfahren für die Diagnose und die Bewertung der Leistungsfähigkeit eines Fahrzeugs nach Anspruch 1, wobei die Bewertung der Widerstandsbeiträge des Fahrzeugmotors und anderer Fahrzeug- und/oder externer Elemente erhalten wird mittels:

- Berechnung durchschnittlicher Werte, die auf die Verlangsamungszeitperiode ausgedehnt sind, einer augenblicklichen Widerstandskurve (C) einer Fahrzeugmotorrotation, die von der Motorsteuereinheit verfügbar ist, und der ersten Kurve (D);
- Berechnung eines negativen Durchschnittswertes (D') durch Subtraktion des Wertes der augenblicklichen Widerstandskurve (C) aus dem Durchschnittswert der ersten Kurve (D);

und wobei die zweite berechnete Drehmomentkurve (E) durch Subtraktion des negativen Durchschnittswerts (D') und der Werte der augenblicklichen Widerstandskurve (C) des Beschleunigungsschritts von der ersten Kurve (D) erhalten wird, wobei die Werte der Kurve (C) auf die äquivalente Motor-U/min der ersten Kurve (D) bezogen sind.

3. Verfahren für die Diagnose und die Bewertung der Leistungsfähigkeit eines Fahrzeugs nach Anspruch 1, wobei der Vergleich so durchgeführt wird, dass:

- falls die zweite Kurve (E) niedriger als die tatsächliche Drehmomentkurve (B) ist, es ein potentielles Problem des Motors identifiziert;
- falls andernfalls die zweite Kurve (E) in zumindest einigen Punkten nicht die tatsächliche Drehmomentkurve (B) erreicht, es die Existenz eines potentiellen Problems anderer Elemente der Motoreinheit identifiziert;
- falls andernfalls die zweite Kurve (E) die maximale Drehmomentkurve (A) überschreitet, es die Existenz eines potentiellen Manipulierens der Motorsteuereinheit identifiziert;
- es andernfalls identifiziert, dass die Fahrzeugleistungsfähigkeit korrekt ist.

4. Verfahren für die Diagnose und die Bewertung der Leistungsfähigkeit eines Fahrzeugs nach Anspruch 2, wobei die Verlangsamungszeitperiode des Fahrzeugs einen ersten Schritt mit freigegebener Kupplung, gefolgt durch einen zweiten Schritt mit gedrückter Kupplung umfasst.

5. Verfahren für die Diagnose und die Bewertung der Leistungsfähigkeit eines Fahrzeugs nach Anspruch 4, wobei der Vergleich so durchgeführt wird, dass er die Existenz eines potentiellen Problems in Fahrzeugkomponenten außerhalb des Motors identifiziert, die ihre Bewegung direkt von dem Motor ableiten, falls eine detektierte Motorreibungskurve höher als die augenblickliche Widerstandskurve (C) der Fahrzeugmotorrotation bezogen auf den Verlangsamungsschritt ist, wobei die detektierte Motorreibung aus der Differenz zwischen den Werten der ersten Kurve (D) während der Verlangsamung, die mit der eingerückten Kupplung berechnet sind, und den Werten, die mit der gedrückten Kupplung berechnet sind, resultiert.

6. Verfahren für die Diagnose und die Bewertung der Leistungsfähigkeit eines Fahrzeugs nach Anspruch 5, wobei der Vergleich so durchgeführt wird, dass er die Existenz eines potentiellen Problems in Komponenten der kinematischen Kette des Fahrzeugs identifiziert, falls eine erste detektierte Fahrzeugreibungskurve höher als ein erster erwarteter Wert gemäß dem System bezogen auf den Verlangsamungsschritt ist, wobei die detektierte Fahrzeugreibung aus den Werten der ersten Kurve (D) während der Verlangsamung, die mit der gedrückten Kupplung berechnet sind, resultiert.

7. Verfahren für die Diagnose und die Bewertung der Leistungsfähigkeit eines Fahrzeugs nach Anspruch 6, wobei, falls das Fahrzeug geeignet ist, einen Hänger zu ziehen, und falls der Hänger vorhanden ist, der Vergleich so durchgeführt wird, dass er die Existenz eines potentiellen Problems in Komponenten des Hängers identifiziert, falls eine zweite detektierte Fahrzeugreibungskurve höher als ein zweiter erwarteter Wert gemäß dem System ist, wobei die zweite detektierte Fahrzeugreibungskurve aus der Differenz zwischen den Werten der ersten Kurve (D) während der Verlangsamung, die mit der eingerückten Kupplung berechnet sind, und den Werten, die mit der gedrückten Kupplung berechnet sind, resultiert, wobei andernfalls die Komponenten des Anhängers als effizient betrachtet werden.

8. Verfahren für die Diagnose und die Bewertung der Leistungsfähigkeit eines Fahrzeugs nach Anspruch 1, mit einem anfänglichen Aufnahmeschritt von Parametern, die einen oder mehrere der folgenden Werte umfassen:

- Gesamtgewicht des Fahrzeugs;
- Verhältnisse der kinematischen Kette;
- Radlänge mit einem linearen Maß der Länge auf der Straße;
- vorderer Bereich des Fahrzeugs und "CX";
- Motor- und Getriebeträgheitsmomente;
- Wirkungsgrad der kinematischen Kette;
- Auslegung des Tachometers.

9. Verfahren für die Diagnose und die Bewertung der Leistungsfähigkeit eines Fahrzeugs nach Anspruch 1, wobei die zumindest eine Beschleunigungszeitperiode gefolgt durch eine Verlangsamung des Fahrzeugs gemäß der folgenden Bedingungen ermittelt wird:

- Überschreiten einer minimalen Geschwindigkeitsschwelle;
- Verifizieren der Drehmomentanforderung und dass die Reibung nicht gedrückt ist;
- Verifizieren, dass keine Ursachen einer Unterbrechung vorhanden sind, wie ein gedrücktes Bremspedal, Motorbremse oder hydraulische Verlangsamer,

falls keine Ursachen für eine Unterbrechung vorhanden sind, es ermittelt, wann das Fahrzeug die maximale Geschwindigkeit erreicht, wobei es danach während des Verlangsamungsschrittes für eine gewisse Zeit (Verlangsamungszeitablauf) abwartet, dessen Ende der Zeitperiode entspricht, die aus dem Moment ermittelt wird, bei dem die Kupplung nicht mehr gedrückt ist.

10. Verfahren für die Diagnose und die Bewertung der Leistungsfähigkeit eines Fahrzeugs nach Anspruch 9, wobei die zumindest eine Beschleunigungszeitperiode gefolgt durch eine Verlangsamung des Fahrzeugs zwei oder mehr der Perioden umfasst, und wobei die Diagnose und Bewertung der Fahrzeugleistungsfähigkeit durch Mitteln des Beitrages jeder der Perioden erhalten wird.

11. Verfahren für die Diagnose und die Bewertung der Leistungsfähigkeit eines Fahrzeugs nach einem der vorhergehenden Ansprüche, wobei die erste Drehmomentkurve (D) gemäß der folgenden Formel berechnet wird:

Motordrehmoment = (Masse * Beschleunigung + Rollwiderstand + Zug) * Radradius / (Übersetzungsverhältnis * Übersetzungswirkungsgrad * Hinterachsverhältnis * Hinterachswirkungsgrad).

12. Verfahren für die Diagnose und die Bewertung der Leistungsfähigkeit eines Fahrzeugs nach einem der vorhergehenden Ansprüche, mit einem Schritt für die Bewertung der Kraftstoffverbrauchsschwankung in Bezug auf Kraftstoffverbrauchswerte, die in der Theorie erwartet werden, auf der Basis der Differenzen der Trends der tatsächlichen Drehmomentkurven (B) und der ersten (D) und zweiten (E) Drehmomentkurve, die bei der verschiedenen Motor-U/min berechnet sind.

13. Vorrichtung für die Diagnose und die Bewertung der Leistungsfähigkeit eines Fahrzeugs mit einem Mittel zum Betätigen jedes der Schritte des Verfahrens nach einem der vorhergehenden Ansprüche.

14. Computerprogramm mit einem Programmcodemittel, das zum Ausführen der Schritte nach einem der Ansprüche 1 bis 12 geeignet ist, wenn ein derartiges Programm auf einem Computer betrieben wird.

15. Computerlesbares Mittel mit einem aufgezeichneten Programm, wobei das Computerlesbare Mittel ein Programmcodemittel umfasst, das zum Ausführen der Schritte nach einem der Ansprüche 1 bis 12 geeignet ist, wenn das Programm auf einem Computer betrieben wird.

**Revendications**

1. Procédé pour le diagnostic et l'évaluation des performances d'un véhicule pourvu d'au moins une unité de commande de moteur, comprenant les étapes de :

- la détermination, dans au moins une période d'accélération suivie d'une période de décélération du véhicule, de :

- - une courbe (A) de couple livrable maximal par l'unité de commande de moteur ;
- - une courbe (B) de couple réel livré par l'unité de commande de moteur ;
- - une première courbe de couple (D) calculée en fonction des contributions de frottement du moteur du véhicule et d'autres éléments véhiculaires et/ou externes ;
- - une deuxième courbe de couple (E) calculée à partir de ladite première courbe de couple calculée (D), en soustrayant une évaluation desdites contributions de frottement du moteur du véhicule et d'autres éléments véhiculaires et/ou externes ;

- la comparaison de ladite deuxième courbe de couple (E), calculée pendant le temps d'accélération, à ladite courbe de couple réel (B), afin d'obtenir ledit diagnostic et ladite évaluation des performances du véhicule.

2. Procédé pour le diagnostic et l'évaluation des performances d'un véhicule selon la revendication 1, dans lequel ladite évaluation des contributions de résistance du moteur du véhicule et d'autres éléments véhiculaires et/ou externes est obtenue au moyen de :

- le calcul de valeurs moyennes, étendues à ladite période de temps de décélération, d'une courbe de résistance instantanée (C) de rotation de moteur du véhicule, disponibles à partir de ladite unité de commande de moteur, et de ladite première courbe (D) ;
- le calcul d'une valeur moyenne négative (D') en soustrayant la valeur de ladite courbe de résistance instantanée (C) à ladite valeur moyenne de ladite première courbe (D) ;

et dans lequel ladite deuxième courbe de couple calculée (E) est obtenue en soustrayant ladite valeur moyenne négative (D') et les valeurs de ladite courbe de résistance instantanée (C) de l'étape d'accélération à ladite première courbe (D), lesdites valeurs de ladite courbe (C) étant en référence à un régime moteur équivalent de ladite première courbe (D).

3. Procédé pour le diagnostic et l'évaluation des performances d'un véhicule selon la revendication 1, dans lequel ladite comparaison est effectuée de sorte que :

- si ladite deuxième courbe (E) est inférieure à ladite courbe de couple réel (B), elle identifie un problème potentiel du moteur ;
- autrement, si ladite deuxième courbe (E) n'atteint pas, à au moins certains points, ladite courbe de couple réel (B), elle identifie l'existence d'un problème potentiel d'autres éléments de l'unité de moteur ;
- autrement, si ladite deuxième courbe (E) dépasse ladite courbe de couple maximal (A), elle identifie l'existence d'une falsification potentielle de l'unité de commande de moteur ;
- autrement, elle identifie que les performances du véhicule sont correctes.

4. Procédé pour le diagnostic et l'évaluation des performances d'un véhicule selon la revendication 2, dans lequel ladite période de temps de décélération du véhicule comprend une première étape avec embrayage relâché, suivie d'une deuxième étape avec embrayage enfoncé.

5. Procédé pour le diagnostic et l'évaluation des performances d'un véhicule selon la revendication 4, dans lequel ladite comparaison est effectuée de manière à identifier l'existence d'un problème potentiel dans des composants de véhicule hors du moteur dont le mouvement est dérivé directement du moteur, si une courbe de frottement de moteur détecté est supérieure à ladite courbe de résistance instantanée (C) de la rotation de moteur de véhicule, en relation avec l'étape de décélération, ledit frottement de moteur détecté découlant de la différence entre les valeurs de ladite première courbe (D), au cours de la décélération, calculées avec l'embrayage engagé, et les valeurs calculées avec l'embrayage enfoncé.

6. Procédé pour le diagnostic et l'évaluation des performances d'un véhicule selon la revendication 5, dans lequel ladite comparaison est effectuée de manière à identifier l'existence d'un problème potentiel dans des composants de la chaîne cinématique de véhicule, si une première courbe de frottement de véhicule détecté est supérieure à une première valeur prévue en fonction du système, en relation avec l'étape de décélération, ledit frottement de véhicule détecté découlant des valeurs de ladite première courbe (D), pendant la décélération, calculées avec l'embrayage enfoncé.

**7.** Procédé pour le diagnostic et l'évaluation des performances d'un véhicule selon la revendication 6, dans lequel si le véhicule est apte à remorquer une remorque, et si la remorque est présente, ladite comparaison est effectuée de manière à identifier l'existence d'un problème potentiel dans des composants de la remorque, si une deuxième courbe de frottement de véhicule détecté est supérieure à une deuxième valeur prévue en fonction du système, ladite deuxième courbe de frottement de véhicule détecté découlant de la différence entre les valeurs de ladite première courbe (D), pendant la décélération, calculées avec l'embrayage engagé, et les valeurs calculées avec l'embrayage enfoncé, autrement les composants de la remorque sont considérés comme étant efficaces.

**8.** Procédé pour le diagnostic et l'évaluation des performances d'un véhicule selon la revendication 1, comprenant une étape d'acquisition initiale de paramètres comprenant une ou plusieurs des valeurs suivantes :

- le poids total du véhicule ;
- les rapports de la chaîne cinématique ;
- la longueur de roue, avec une mesure linéaire de la longueur sur la route ;
- la zone avant et le CX du véhicule ;
- les moments d'inertie du moteur et de la transmission ;
- le rendement de la chaîne cinématique ;
- la valeur nominale du tachygraphe.

**9.** Procédé pour le diagnostic et l'évaluation des performances d'un véhicule selon la revendication 1, dans lequel ladite au moins une période de temps d'accélération suivie d'une décélération du véhicule est déterminée en fonction des conditions suivantes :

- le dépassement d'un seuil de vitesse minimale ;
- la vérification de la demande de couple et que le frottement n'est pas pressé ;
- la vérification qu'il n'y a pas de cause d'interruption, comme la pédale de frein enfoncée, le frein moteur ou le ralentisseur hydraulique,

s'il n'y a pas de cause d'interruption, il détermine quand le véhicule atteint la vitesse maximale, après quoi, pendant l'étape de décélération, il attend un certain temps (temporisation de décélération), dont la fin correspond à ladite période de temps, qui est déterminée à partir du moment auquel ledit embrayage n'est plus enfoncé.

**10.** Procédé pour le diagnostic et l'évaluation des performances d'un véhicule selon la revendication 9, dans lequel ladite au moins une période de temps d'accélération suivie d'une décélération du véhicule comprend deux desdites périodes ou plus, et dans lequel ledit diagnostic et ladite évaluation des performances du véhicule sont obtenus en calculant la moyenne de la contribution de chacune desdites périodes.

**11.** Procédé pour le diagnostic et l'évaluation des performances d'un véhicule selon l'une quelconque des revendications précédentes, dans lequel ladite première courbe de couple (D) est calculée selon la formule suivante :

```
couple moteur = (masse * accélération + résistance
de roulement + trainée) * rayon de roue / (rapport de
boîte de vitesses * rendement de boîte de vitesses *
rapport de pont arrière * rendement de pont arrière).
```

**12.** Procédé pour le diagnostic et l'évaluation des performances d'un véhicule selon l'une quelconque des revendications précédentes, comprenant une étape pour l'évaluation de la variation de consommation de carburant par rapport à des valeurs de consommation de carburant prévues en théorie, sur la base de la différence des tendances desdites courbes de couple réel (B), ainsi que de ladite première courbe de couple (D) et de ladite deuxième courbe de couple (E) calculées avec un régime moteur différent.

**13.** Dispositif pour le diagnostic et l'évaluation des performances d'un véhicule comprenant des moyens d'exécution de chacune des étapes du procédé selon l'une quelconque des revendications précédentes.

14. Programme informatique comprenant des moyens de code de programme aptes à effectuer les étapes selon l'une quelconque des revendications 1 à 12, lorsqu'un tel programme est exécuté sur un ordinateur.

15. Moyens lisibles par ordinateur comprenant un programme enregistré, lesdits moyens lisibles par ordinateur comprenant des moyens de code de programme aptes à effectuer les étapes selon les revendications 1 à 12, lorsque ledit programme est exécuté sur un ordinateur.

FIG. 1

START  21

Detected torque is > B  22

NO → Combustion chamber (injectors, valve tightness, cylinder barrel wear, piston rings, head gasket, etc...) is checked by ENGINE TEST or by traditional systems.  23

YES

Detected torque reached torque B in at least n points?  24

NO → Vehicular limitations intervened? (ABS, smoke map, ASR...)  25

NO → Supercharging system (air filter, intercooler, turbo supercharger, piping), fuel supply system and exhaust gas system are checked by ENGINE TEST or by traditional systems.  26

YES

YES → Repeat the test  27

Detected torque is > MAX  28

YES → ENGINE OR CONTROL UNIT TAMPERING  29

NO

Detected torque is in the acceptable range. Engine perfectly efficient (possible display of engine performance chart)  30

31 → Engine OK. Possible evaluation of the efficiency or efficiency check of other vehicle components

**FIG. 2**

**START**

**35** Is the detected engine friction higher than the friction expected by the control unit?

→ **yes** → **36** Check of the integrity of external components which derive their motion directly from the engine, such as: alternator, water pump, ventilation system, air compressor, air conditioner compressor, etc...

**NO**

**37** Is the detected vehicle friction higher than the friction expected by the system?

→ **yes** → **38** Check of the efficiency of kinematic chain components such as gearbox, rear-axle, distributors, decelerators, braking system, power takeoff, trim and type of the wheels, etc.

**NO**

**39** Is the vehicle suitable to tow a trailer?

→ **NO** → **40** The vehicle's components are efficient.

**yes**

**41** Is the detected friction higher than the friction expected by the system, when towing a trailer?

→ **yes** → **42** Check the efficiency of the trailer's components such as wheel bearings, braking system decelerators, trim and type of the wheels.

**NO**

**43** Trailer's components are efficient

## FIG. 3

Acceleration | Deceleration

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008125929 A